Europäisches Patentamt

European Patent Office

Office européen des brevets

(19)

(11) EP 0 880 047 A1

(12) DEMANDE DE BREVET EUROPEEN

(43) Date de publication:
25.11.1998 Bulletin 1998/48

(51) Int. Cl.$^6$: G02F 1/015

(21) Numéro de dépôt: 98201640.4

(22) Date de dépôt: 18.05.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 23.05.1997 FR 9706351

(71) Demandeur:
SCHLUMBERGER INDUSTRIES S.A.
92120 Montrouge (FR)

(72) Inventeurs:
• Knap, Wojciech
  34080 Montpellier (FR)
• Mosser, Vincent
  92350 Le Plessis Robinson (FR)
• Wehbe-Alause, Héléne
  38160 Saint-Marcellin (FR)

(74) Mandataire: Petit, Maxime
  Schlumberger Industries
  Direction Technique/
  Propriété Intellectuelle
  B.P. 620-05
  92542 Montrouge Cedex (FR)

(54) **Filtre optique comprenant une structure à multipuits quantiques**

(57) L'invention est relative à un filtre optique (9) fonctionnant à température ambiante, comprenant une structure à multipuits quantiques (1) réalisée à partir de couches alternées de matériaux semiconducteurs et présentant une absorption résonante d'un rayonnement optique de longueur d'onde donnée entre au moins deux niveaux d'énergie d'un même puits quantique (1) de la bande de conduction ou de valence, l'un desdits niveaux d'énergie appelé niveau inférieur $E_0$ comportant des porteurs de charge et l'autre niveau appelé niveau supérieur $E_1$ recevant des porteurs de charge provenant dudit niveau inférieur $E_0$ et excités sous l'effet du rayonnement optique considéré, les niveaux d'énergie se déplaçant sous l'action d'un champ électrique appliqué à la structure.

Fig.1

EP 0 880 047 A1

## Description

L'invention est relative à un filtre optique comprenant une structure à multipuits quantiques.

Les filtres optiques sont utilisés dans de nombreuses applications et notamment dans les appareils permettant d'analyser des gaz et/ou de déterminer leur concentration.

On connaît des filtres utilisant une hétérostructure semiconductrice comportant plusieurs couches superposées de matériaux semiconducteurs ayant des bandes interdites d'énergies différentes et formant ainsi une structure dite à multipuits quantiques.

Ces filtres fonctionnent suivant le principe des transitions optiques de la bande de valence vers la bande de conduction sous l'effet d'un rayonnement optique. On parle alors de transitions interbandes et de filtres interbandes.

Le spectre de transmission de ce type de filtres est celui d'un filtre passe-bas en énergie et comporte donc un front d'absorption situé légèrement au dessus de la bande interdite d'énergie matériau.

Lorsque l'on souhaite utiliser un filtre optique, notamment dans les appareils précités, il est important de pouvoir sélectionner un domaine spectral autour de la longueur d'onde du gaz considéré afin de pouvoir isoler sa contribution.

Or, les filtres interbandes ne sont pas sélectifs en raison de la présence de ce front d'absorption.

En outre, le spectre d'absorption des filtres interbandes est très sensible à la température ce qui pose des problèmes d'utilisation de tels filtres dans les appareils précités lorsque l'on veut détecter la présence d'un gaz et/ou sa concentration pour des températures ambiantes qui varient considérablement d'un environnement à l'autre.

La présente invention vise à remédier à au moins un des problèmes mentionnés ci-dessus en proposant un filtre optique fonctionnant à température ambiante, comprenant une structure à multipuits quantiques réalisée à partir de couches alternées de matériaux semiconducteurs et présentant une absorption résonante d'un rayonnement optique de longueur d'onde donnée entre au moins deux niveaux d'énergie d'un même puits quantique de la bande de conduction ou de valence, l'un desdits niveaux d'énergie appelé niveau inférieur $E_0$ comportant des porteurs de charge et l'autre niveau appelé niveau supérieur $E_1$ recevant des porteurs de charge provenant dudit niveau inférieur $E_0$ et excités sous l'effet du rayonnement optique considéré, les niveaux d'énergie se déplaçant sous l'action d'un champ électrique appliqué à la structure.

Le filtre selon l'invention fonctionne suivant le principe des transitions optiques entre deux ou plusieurs niveaux énergétiques (ou sousbandes) qui apparaissent dans la bande de conduction ou dans la bande de valence.

Lorsque des photons traversent la structure, les porteurs (électrons ou trous) d'un même puits quantique de la bande de conduction ou de la bande de valence sont excités vers les niveaux (sousbandes) supérieurs en absorbant les photons incidents de longueur d'onde $\lambda_0$.

On obtient ainsi un filtre optique dit à transmission spectrale en encoche qui absorbe à la longueur d'onde $\lambda_0$ et autour de cette longueur d'onde et qui est transparent aux autres longueurs d'onde.

Ceci présente l'avantage d'avoir un filtre sélectif pour le rayonnement optique et donc pour le gaz envisagé, centré sur la longueur d'onde $\lambda_0$.

Par ailleurs, les niveaux d'énergie dans un puits quantique sont très peu sensibles aux variations de température.

Un tel filtre optique peut donc être utilisé dans une large gamme de température ambiantes en fonction des différents environnements où est placé le filtre.

En appliquant un champ électrique à la structure à multipuits quantiques du filtre il est possible de modifier les niveaux énergétiques dans chacun des puits quantiques.

Ainsi, en fonction de la position des niveaux d'énergie et de l'intensité du champ électrique appliqué ledit niveau d'énergie $E_1$ peut être, soit déplacé de manière à ce que le filtre soit "accordé" sur un rayonnement de longueur d'onde différente de celle correspondant à la position initiale du niveau $E_1$, soit couplé par effet tunnel aux états du continuum d'états d'énergie et ainsi affaiblir l'absorption intersousbandes.

Le niveau d'énergie supérieur $E_1$ peut se déplacer au dessus de la barrière adjacente à un puits quantique sous l'action d'un champ électrique.

Selon une caractéristique de l'invention, les états X de la bande de conduction dans les couches de matériaux semi-conducteurs formant barrière sont inférieurs aux états $\Gamma$ finaux de ladite bande dans ces mêmes couches.

Les matériaux semi-conducteurs utilisés sont par exemple choisis parmi les matériaux III - V.

Avantageusement, la structure à multipuits quantiques est réalisée à partir de couches alternées de GaAs et $Al_xGa_{1-x}As$.

Plus particulièrement, la teneur x en aluminum est supérieure à 40 %.

Selon une autre caractéristique de l'invention, les puits quantiques renferment au moins deux niveaux d'énergie supérieurs qui sont prévus pour recevoir respectivement des porteurs de charge provenant du niveau d'énergie inférieur et qui sont excités sous l'action d'au moins deux rayonnements optiques constitués d'au moins deux longueurs d'onde distinctes.

Lorsque le courant de fuite circulant dans la structure à multipuits quantiques est élevé il est possible de former une barrière supplémentaire au dessus de chaque barrière adjacente à un puits quantique afin de prolonger cette dernière et de maintenir les porteurs de charge à l'intérieur des puits quantiques.

Préférentiellement, la barrière supplémentaire possède une largeur inférieure à celle de la barrière située en dessous.

L'invention a également pour objet un dipositif de filtrage de rayonnements optiques qui comprend plusieurs filtres optiques tels que décrits précédemment et qui sont chacun adaptés à au moins un rayonnement de longueur d'onde différente.

L'invention a aussi pour objet un appareil de détermination d'une concentration d'au moins un gaz comprenant :

- une source d'un rayonnement optique dont la gamme spectrale couvre au moins une raie d'absorption d'un gaz,
- une cellule contenant ledit gaz et qui est traversée par le rayonnement,
- au moins un filtre recevant le rayonnement dont la densité spectrale a été modifiée par le gaz,
- des moyens pour appliquer un champ électrique aux bornes dudit filtre,
- un détecteur du rayonnement filtré mesurant l'énergie dudit rayonnement,
- et des moyens pour déterminer la concentration du gaz à partir de deux mesures de l'énergie dont l'une sert de valeur de référence,
  caractérisé en ce que le filtre est conforme au filtre de l'invention défini précédemment.

D'autres caractéristiques et avantages apparaitront au cours de la description qui va suivre donnée à titre d'exemple non limitatif, et faite en référence aux dessins annexés, sur lesquels :

- la figure 1 est une vue simplifiée d'un puits quantique d'un filtre optique selon l'invention,
- la figure 2 est une courbe donnant l'allure de la transmission spectrale d'un filtre optique selon l'invention,
- les figures 3 et 4 montrent respectivement les deux effets techniques obtenus sur un filtre optique selon l'invention par application d'un champ électrique,
- les figures 5 et 6 montrent respectivement l'allure des courbes de transmission optique d'un filtre selon l'invention avec et sans voltage appliqué ainsi que le rapport desdites courbes T(V) / T(0) suivant les deux effets illustrés aux figures 3 et 4.
- la figure 7 représente schématiquement les différents éléments constitutifs d'un appareil de détermination de la concentration d'un gaz,
- la figure 7a indique l'allure du signal reçu par le détecteur dans un appareil de détermination de la concentration d'un gaz tel que représenté sur la figure 7,
- la figure 8 représente la position des états X et $\Gamma$ l'un par rapport à l'autre dans la structure à multipuits quantiques d'un filtre optique selon l'invention lorsque les états X sont inférieurs aux états $\Gamma$ dans la barrière,
- les figures 9 et 10 sont des vues en coupe simplifiées des différents constituants d'un filtre optique avant et après gravure de la structure,
- la figure 10a représente trois courbes de transmission optique en fonction de la longueur d'onde obtenues pour l'échantillon A avec trois modes de couplage différents : Brewster (a), guide d'onde à 2 (b) et 4 passages (c),
- les figures 10b et 10c représentent respectivement les motifs des structures à puits quantiques asymétriques référencées F et G,
- la figure 11 représente les courbes T(V) / T(0) en fonction du nombre d'onde respectivement à 6,5 et 7V à la température 45°K pour la structure référencée A,
- la figure 11a représente les courbes T(V)/T(0) en fonction du nombre d'onde respectivement à 3,5 et 4,5V à la température de 300°K pour la structure référencée A,
- la figure 12 représente les courbes T(V) / T(0) en fonction du nombre d'onde respectivement à 10 et 4V et aux températures de 45°K et 300°K pour la structure référencée F,
- les figures 13 et 14 représentent les courbes T(0) et T(V) / T(0) en fonction du nombre d'onde pour trois tensions à la température de 300°K respectivement pour les structures référencées B et F,
- la figure 15 est une vue en coupe simplifiée d'un dispositif de filtrage de rayonnement optiques selon l'invention,
- la figure 16 est une vue simplifiée d'une structure à multipuits quantiques selon une caractéristique avantageuse de l'invention.

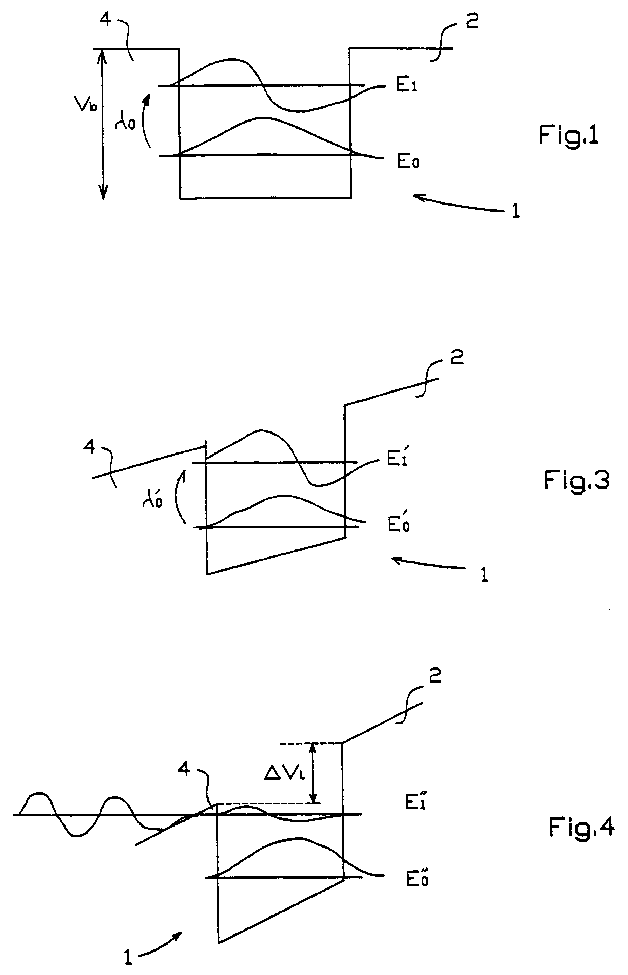

La figure 1 représente schématiquement un puits quantique 1 renfermant deux niveaux d'énergie quantifiés $E_0$, $E_1$ de la bande de conduction ou de la bande de valence.

La quantification des niveaux d'énergie dans la bande considérée est obtenue en empilant des couches alternées suffisamment fines de matériaux semi-conducteurs de bandes interdites d'énergies différentes. On obtient ainsi une structure constituée de plusieurs puits quantiques du type de celui représenté à la figure 1 avec des barrières 2, 4 encadrant chaque puits 1. $V_b$ désigne la hauteur de barrière ou différence énergétique entre le haut de la barrière et le fonds du puits.

Dans un puits symétrique, les deux niveaux d'énergie $E_0$ et $E_1$ sont de parités différentes pour que la transition entre lesdits niveaux soit possible, condition qui n'a pas à être respectée dans un puits asymétrique.

L'allure des fonctions d'onde est représentée sur chaque niveau d'énergie.

Le niveau inférieur $E_0$ ou niveau fondamental comporte des porteurs de charge qui sont des électrons ou des trous selon qu'il s'agit de la bande de conduction ou de la bande de valence.

Sous l'action d'un rayonnement optique de longueur d'onde $\lambda_0$ les porteurs de charge sont excités du niveau fondamental vers le niveau $E_1$ en absorbant les photons de ce rayonnement optique.

Le filtre optique ainsi réalisé présente une transmission spectrale T dite en encoche en fonction de la longueur d'onde $\lambda$, telle que représentée sur la figure 2, ce qui signifie que le filtre absorbe le rayonnement à la longueur d'onde $\lambda_0$ et autour de cette longueur d'onde ($\lambda_0 \pm \Delta\lambda$) et laisse passer les autres longueurs d'onde.

Lorsqu'un champ électrique est appliqué à ce filtre optique de manière à avoir une composante non nulle suivant l'axe de croissance de l'empilement des matériaux, les niveaux d'énergie dans les puits quantiques sont modifiés et deux effets différents peuvent être obtenus, tels que représentés sur les figures 3 et 4.

Suivant un premier effet (Fig.3), les niveaux $E_0$ et $E_1$ de la figure 1 deviennent respectivement les niveaux $E'_0$ et $E'_1$, la bande de conduction ou de valence s'incline, la forme des puits quantiques et les niveaux énergétiques $E_0$ et $E_1$ sont modifiés.

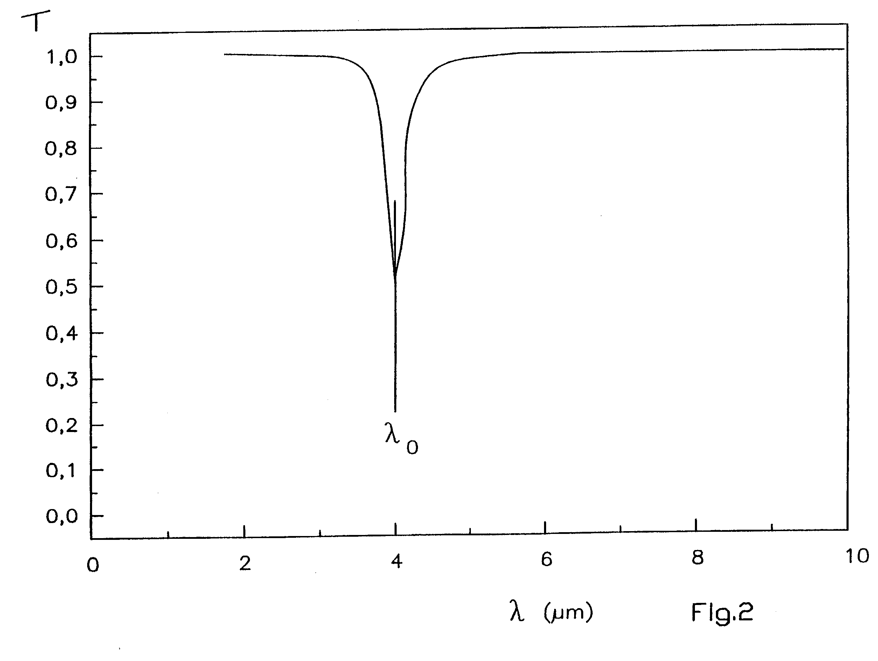

Cela entraine un déplacement du pic d'absorption du filtre de la longueur d'onde $\lambda_0$ vers la longueur d'onde $\lambda'_0$ correspondant respectivement aux nombres d'onde $\upsilon_0$ et $\upsilon'_0$, comme en témoignent les deux courbes T(0) et T(V) de la figure 5 qui indiquent respectivement l'allure de la transmission optique du filtre selon l'invention à 0V et sous application d'une tension électrique V en fonction du nombre d'onde $\upsilon$ (en $cm^{-1}$).

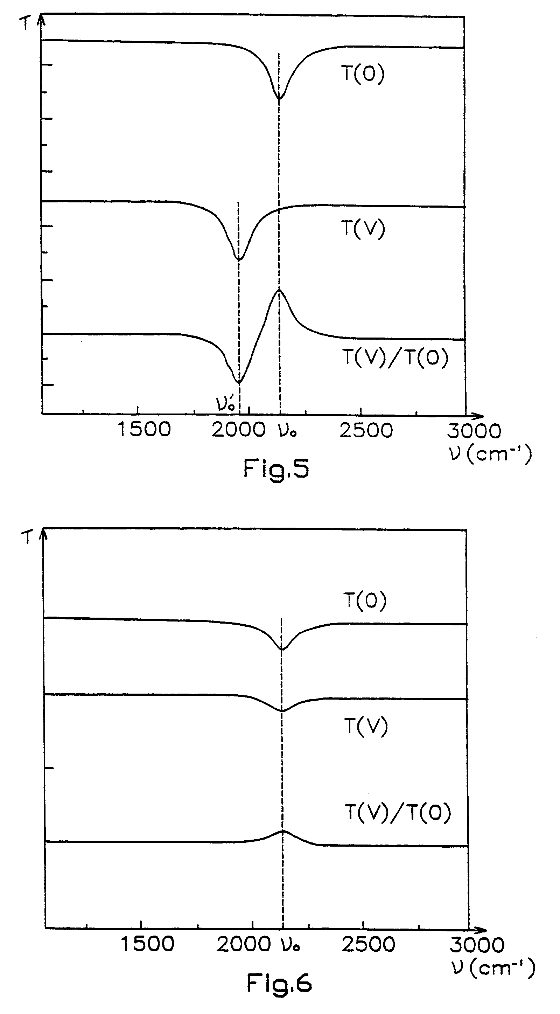

Sur ces courbes, l'échelle de la transmission optique n'a pa été indiquée car il ne s'agit pas de courbes expérimentales. Ces courbes ainsi que celles de la figure 6 ont été données uniquement pour souligner les deux effets techniques possibles d'un filtre optique selon l'invention.

La troisième courbe de cette figure correspond au rapport des deux courbes T(V) / T(0) et sera utilisée par la suite pour quantifier la modulation de la transmission optique du filtre.

Ainsi, le filtre peut être accordé sur différentes longueurs d'onde en fonction des niveau énergétiques initiaux et des valeurs de tension appliquées à la structure.

Un tel filtre optique peut être très utile par exemple dans un appareil qui détermine la concentration d'un ou de plusieurs gaz.

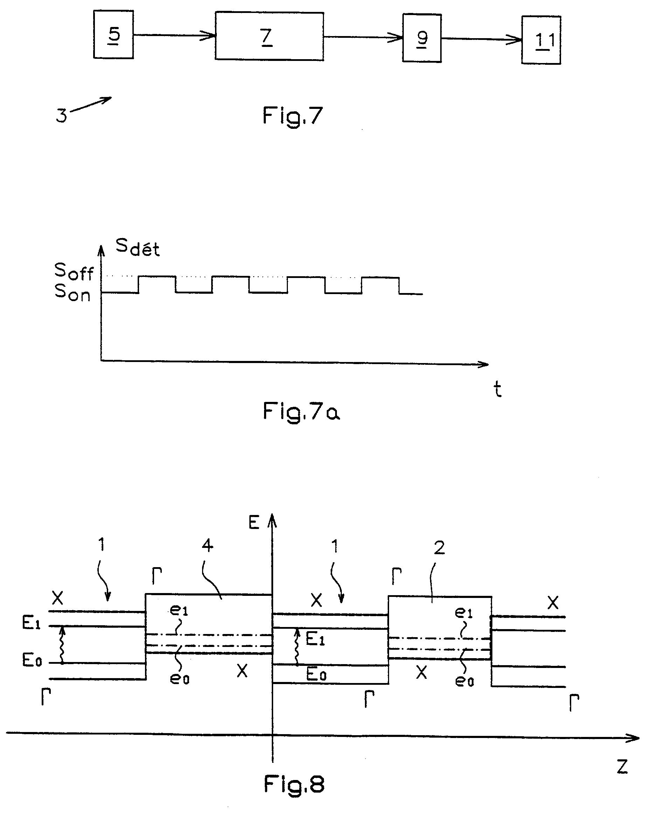

En effet, un tel appareil 3 comprend, tel qu'indiqué sur la figure 7, une source 5 produisant un rayonnement optique qui présente une absorption sélective vis-à-vis de longueurs d'onde du gaz considéré (par exemple $\lambda_0 = 4,7$ μm pour le monoxyde de carbone), une cellule 7 traversée par ce rayonnement et contenant ledit gaz, un filtre optique 9 qui reçoit le rayonnement dont la densité spectrale a été modifiée par le gaz et un détecteur 11 recevant le rayonnement filtré et mesurant l'énergie de ce rayonnement.

Afin de déterminer la concentration du gaz, deux mesures d'énergie sont nécessaires, l'une adaptée à la longueur d'onde du gaz considéré et l'autre servant de référence. Ceci sera expliqué plus en détail ultérieurement.

Le filtre optique 9 selon l'invention permet justement de par son caractère "accordable" de se déplacer sur une autre longueur d'onde qui ne correspond pas à celle du gaz considéré et ainsi de constituer une position de référence. On comprend qu'un tel filtre est très avantageux puisqu'il ne met en mouvement aucune pièce mécanique et qu'il ne comporte qu'un seul trajet optique.

En outre, il est sélectif pour la (ou les) longueur(s) d'onde envisagée(s) par rapport aux filtres optiques interbandes précédemment mentionnés.

Le deuxième effet (Fig.4) consiste à appliquer une tension suffisante pour affaiblir la force de la transition. Ce type de modulation est basé sur le fait que la force d'absorption de la transition dépend du recouvrement des fonctions d'onde des porteurs des deux sousbandes mises en jeu dans la transition. Sous l'effet d'un champ électrique (tension) suffisant, le deuxième niveau $E''_1$ peut commencer à s'approcher du haut de la barrière 4 et même à le dépasser. Sa fonction d'onde a alors tendance à s'étaler sur une région nettement plus grande que le puits 1 alors que la fonction d'onde du niveau fondamental $E''_0$ reste bien confinée dans le puits. Le recouvrement des deux fonctions d'ondes décroît et la force de la transition associée s'affaiblit. Ce mécanisme a pour effet de moduler l'intensité d'absorption du filtre.

La figure 6 montre qu'en appliquant une tension électrique adaptée à un filtre optique dont le niveau d'énergie supérieur est proche du continuum d'états d'énergie le pic d'absorption dudit filtre s'affaisse ou "s'évanouit".

La modulation existe dès que le niveau supérieur subit un couplage au continuum d'énergie suffisant, par effet tunnel à travers la barrière inclinée sous l'effet du champ électrique. Ce phénomène se produit dès que la différence de potentiel appliquée à chaque puits $\Delta V_L$ n'est plus négligeable par rapport à la différence énergétique (sous tension nulle) entre le niveau supérieur $E_1$ et le haut de la barrière. Cet effet ne s'accompagne pas forcément d'un déplacement énergétique notable entre les niveaux, le pic d'absorption peut donc s'affaiblir sans se déplacer.

L'effet se manifeste par exemple sur un niveau énergétique $E_1$ qui est à une centaine de meV du haut de la barrière pour des différences de potentiel appliquées aux puits de 10meV environ (5V sur la structure totale).

Un tel filtre optique peut également être utilisé dans un appareil 3 de détermination de la concentration d'un gaz ou de plusieurs gaz comme représenté à la figure 7.

En effet, la "position" du filtre dans laquelle le pic d'absorption est atténué voire affaissé fournit un bon contraste par rapport à la "position" initiale obtenue en l'absence de tension électrique et permet de servir de référence au filtre optique.

En outre, le fait d'atténuer voire d'affaisser le pic d'absorption a pour effet d'augmenter la valeur de transmission du filtre en la rapprochant de la valeur 1 sur toute la largeur spectrale du rayonnement. Ainsi, s'il se trouve un gaz interférent dont la longueur d'onde d'absorption se situe dans la plage de longueurs d'onde de la source lumineuse, son effet se trouve en quelque sorte dilué puisque l'énergie mesurée sera celle du rayonnement dont la densité spectrale a été modifiée par les gaz, atténuée par la valeur de transmission du filtre qui est proche de 1. La valeur de référence ainsi obtenue est plus fiable que si l'on déplace le pic d'absorption de la transmission spectrale du filtre optique sur une raie d'absorption d'un gaz interférent.

Par ailleurs, quel que soit l'effet technique utilisé dans le filtre optique selon l'invention (Fig.5 ou 6) celui-ci est autocalibré.

La transmission optique du filtre est modulée entre deux états notés $T_{on}$ (mesure) et $T_{off}$ (référence) sous l'action d'une tension électrique par exemple en créneaux. Le signal $S_{dét}$ reçu par le détecteur 11 en fonction du temps prend alors alternativement les valeurs $S_{on}$ et $S_{off}$ comme représenté sur la figure 7a.

Ces deux signaux s'expriment comme indiqué ci-dessous en fonction de la transmission du gaz $T_g(\upsilon)$, de la transmission du filtre $T_{on}(\upsilon)$ (ou $T_{off}$) où $\upsilon$ désigne le nombre d'onde. La contribution du reste de l'appareil 3 est représentée par $T_{opt}(\upsilon)$ qui est le produit du spectre d'émission de la source 5, du spectre de détection du détecteur 11 et de la transmision sur le trajet optique entre la source et le détecteur (exceptées celle du gaz et celle du filtre 9). L'appareil 3 est limité par la source et le détecteur au domaine [$\upsilon 1$, $\upsilon 2$]. Ces signaux dépendent du nombre d'onde $\upsilon$ et la transmission du gaz dépend de sa pression P.

$$S_{on}(P) = \int_{\upsilon 1}^{\upsilon 2} T_{opt}(\upsilon)T_g(\upsilon,P)T_{on}(\upsilon)d\upsilon$$

$$S_{off}(P) = \int_{\upsilon 1}^{\upsilon 2} T_{opt}(\upsilon)T_g(\upsilon,P)T_{off}(\upsilon)d\upsilon$$

La réponse de l'appareil 3, pour être autoréférencée, s'exprime par exemple sous la forme :

$$S = \Delta S_{dét} / 2<S_{dét}> = (S_{off}(P) - S_{on}(P)) / (S_{off}(P) + S_{on}(P))$$

$$= \int_{\upsilon 1}^{\upsilon 2} T_{opt}(\upsilon)T_g(\upsilon,P)[T_{on}(\upsilon)-T_{off}(\upsilon)]d\upsilon / \int_{\upsilon 1}^{\upsilon 2} T_{opt}(\upsilon)T_g(\upsilon,P)[T_{on}(\upsilon)+T_{off}(\upsilon)]d\upsilon$$

où $\Delta S_{dét}$ est la partie alternative du signal du détecteur et $<S_{dét}>$ sa partie continue. La réponse S est obtenue en effectuant une détection synchrone du signal reçu par le détecteur (ceci est réalisé par exemple avec un amplificateur opérationnel piloté par le signal de commande appliqué au filtre optique), en isolant par des moyens électroniques conventionnels la partie continue dudit signal reçu et en faisant le rapport du signal alternatif démodulé sur la partie continue du signal. La réponse S ainsi obenue est indépendante des dérives de l'appareil.

Supposons, par exemple, que l'émission de la source s'affaiblisse dans le temps, et diminue d'un facteur 2. $T_{opt}$ est donc affecté d'un facteur 2 mais ce facteur s'élimine dans la division des signaux. Le signal est également stable face aux variations de sensibilité du détecteur et à l'empoussièrement du trajet optique qui pourrait diminuer sa transmission. Il est même indépendant des variations de transmission du filtre si celles-ci sont uniformes spectralement. La seule condition est la stabilité de la forme du spectre des différents composants.

Il est également intéressant de réaliser une structure à multipuits quantiques dans laquelle les puits quantiques renferment un niveau d'énergie fondamental et deux (ou plus de deux) niveaux d'énergie excités de parités différentes de celle du niveau fondamental (si le puits est symétrique) afin que les transitions optiques entre le niveau fondamental et chacun des niveaux excités correspondent respectivement à une absorption optique à deux (ou plus de deux) longueurs d'onde différentes. Ainsi, le filtre peut être adapté à plusieurs raies d'absorption gazeuses.

Lorsque les états X de la bande de valence ou de la bande de conduction dans la barrière 2, 4 adjacente à un puits quantique 1 sont situés en dessous des états $\Gamma$ de cette bande dans la barrière, comme représenté sur la figure 8 (les états X et $\Gamma$ sont respectivement représentés en pointillés et en traits pleins) il existe dans la barrière les niveaux d'énergie quantifiés $e_0$ et $e_1$ (représentés en traits mixtes). Ainsi, on peut croire que la barrière effective vue par les porteurs de charge du puits (électrons ou trous) peut être diminuée voire annulée et que les porteurs peuvent être transférés dans la barrière en dépeuplant le puits et en annulant le processus de transition optique.

Les transitions intersousbandes seraient donc aléatoires et le filtre optique peu efficace. De même, on peut penser que la présence d'états X dans les barrières 2, 4 situés en dessous des états $\Gamma$ facilite l'effet tunnel à travers les barrières et augmente le courant d'obscurité.

Ce préjugé est d'autant plus défavorable que les hauteurs de barrière sont grandes et donc que les longeurs d'onde du rayonnement optique absorbées par le filtre sont courtes ce qui est le cas pour les longueurs d'onde voisines de $10\mu m$ et en dessous de cette valeur.

A fortiori, pour les longueurs d'onde inférieures ou égales à $5\mu m$, notamment dans la fenêtre $3\text{-}5\mu m$ qui est très intéressante pour les applications de type analyse de gaz et/ou détermination de la concentration de gaz, il existe un important préjugé dissuadant l'homme du métier de réaliser des filtres optiques à transitions intersousbandes.

En outre, à la température ambiante, pour les longueurs d'onde voisines de $10\mu m$ et inférieures à cette valeur l'homme du métier est également dissuadé de réalise un filtre optique à transitions intersousbandes à cause du phénomène du rayonnement du corps noir qui risque d'interférer avec le phénomène des transitions optiques intersousbandes.

Toutefois, la Demanderesse a découvert de façon tout à fait inattendue que l'on pouvait réaliser des filtres optiques à transitions intersousbandes fonctionnant de manière efficace à la température ambiante malgré le phénomène du rayonnement du corps noir et même lorsque les états X de la bande de valence ou de conduction dans les barrières 2, 4 sont inférieurs aux états $\Gamma$ de cette barrière.

Les matériaux semi-conducteurs utilisés dans la structure à multipuits quantiques du filtre optique selon l'invention sont choisis, par exemple, parmi les matériaux du type III - V, comme GaAs / GaAlAs, GaAs / GaInAs, GaP / GaInP, GaN / GaAlN ou GaN / GaInN, mais pourraient être également choisis parmi les matériaux II-VI CdTe / CdZnTe, CdTe / CdMnTe, parmi les matériaux IV-IV comme SiGe ou encore parmi les matériaux IV-VI comme PbTe / PbMnTe ou PbSe / PbTeSe.

Dans les matériaux du type III - V, le couple de matériaux GaAs / $Al_X Ga_{1-X} As$ est le plus répandu sur le marché, notamment dans l'industrie de la microélectronique.

Dans une structure à multipuits quantiques réalisée à partir de couches alternées de matériaux GaAs et $Al_X Ga_{1-X} As$ le préjugé dévaforable évoqué ci-dessus se rencontre notamment pour les teneurs x en aluminium supérieures à 40 %.

Pour ces teneurs, le matériau AlGaAs formant barrière devient un matériau semi-conducteur à bande interdite indirecte et, alors que le maximum de la bande de valence est toujours de type $\Gamma$, le minimum de la bande de conduction devient de type X.

La Demanderesse a montré par des essais qu'un filtre optique à transitions intersousbandes comprenant une telle structure à multipuits quantiques fonctionne de manière efficace à température ambiante. Les résultats de ces essais vont être mentionnés après l'exemple de fabrication d'un filtre optique qui suit.

### Exemple de fabrication de la structure B

Le filtre optique 9 selon l'invention est par exemple réalisé en deux étapes qui sont toutes deux compatibles avec les techniques de fabrication couramment utilisées dans le domaine de la microélectronique.

La première étape consiste à élaborer les multipuits quantiques et la seconde à réaliser des contacts électriques.

L'élaboration des multipuits quantiques est réalisée par le dépôt d'atomes de matériaux semiconducteurs à l'aide de la technique connue de l'Epitaxie par Jets Moléculaires (EJM).

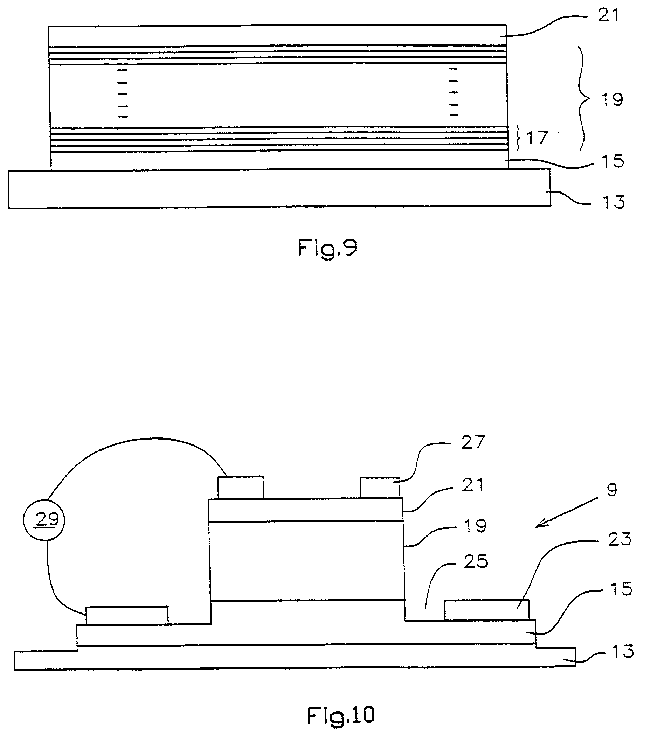

Cette technique est applicable à une grande gamme de matériaux III - V et, notamment, est couramment utilisée pour le couple de matériaux GaAs / AlGaAs. Au cours de cette étape, on dépose par EJM, sur un substrat 13 carré de GaAs semi-isolant d'environ 3mm de côté, une électrode 15 dite électrode inférieure réalisée en matériau GaAs dopé par des atomes de silicium avec une densité de $2.10^{18}$ cm$^{-3}$ (Fig.9).

L'épaisseur de cette électrode varie entre 200 et 300nm et est par exemple égale à 300nm.

De 50 à 200 multicouches ou périodes 17 de GaAs / $Al_{0,6}Ga_{0,4}As$ sont ensuite déposées par EJM et par exemple 100 périodes.

On pourrait avoir un nombre de périodes inférieur à 50 à condition que le couplage avec le rayonnement optique soit particulièrement efficace.

En fonction des applications envisagées, si le coût économique du filtre n'est pas une contrainte, il est envisageable de déposer plus de 200 périodes.

La largeur de chaque puits en GaAs ainsi formé est de 4,5nm et la largeur de chaque barrière en $Al_{0,6}Ga_{0,4}As$ est de 10nm.

Afin d'introduire des porteurs (électrons) sur le premier niveau d'énergie du puits de la bande de conduction on dope la structure 19 ainsi obtenue avec une concentration d'atomes de silicium d'environ $2.10^{12}cm^{-2}$.

Une deuxième électrode 21 dite électrode supérieure est ensuite déposée par EJM sur la structure à multipuits quantiques 19 ainsi élaborée de façon analogue au dépôt de l'électrode inférieure 15.

Toutefois, son épaisseur est de 200nm.

Le diamètre de la structure à multipuits quantiques 19 ainsi épitaxiée est comprise entre 5 et 15cm suivant le substrat de GaAs utilisé et, par exemple, est d'environ 5cm.

La seconde étape consiste à graver la structure à multipuits quantiques sur un mésa (masque) de diamètre d'environ 1mm par une technique classique de photolithographie avec un jeu de masques adaptés.

Ainsi, une gravure sélective généralement réalisée par réaction ionique RIE (en terminologie anglosaxone Reactive Ionic Etching) est réalisée dans l'électrode inférieure 15 autour de la structure à multipuits quantiques 19 sur une partie de l'épaisseur de ladite électrode (masque n°1).

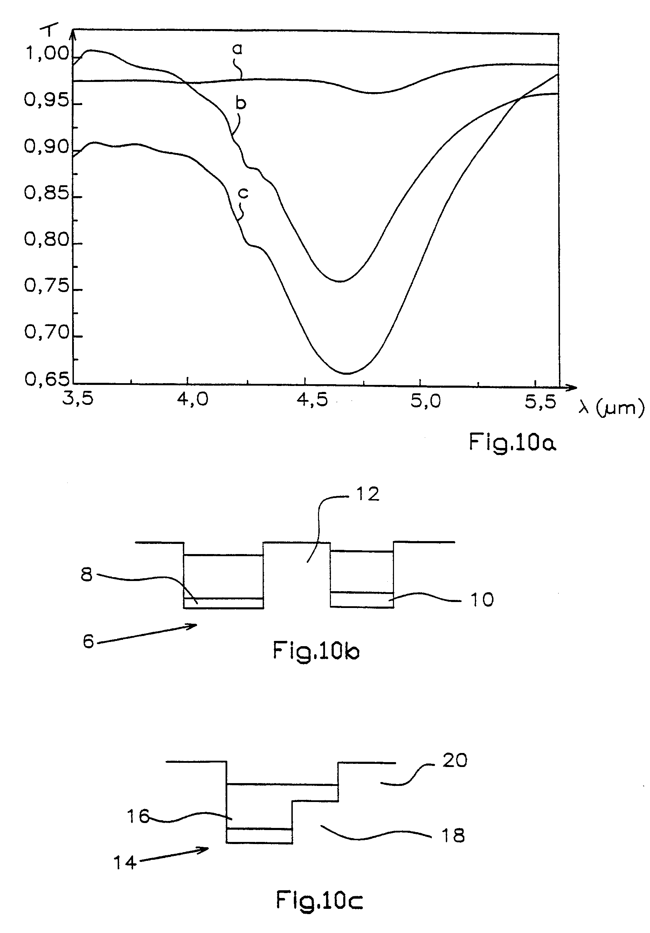

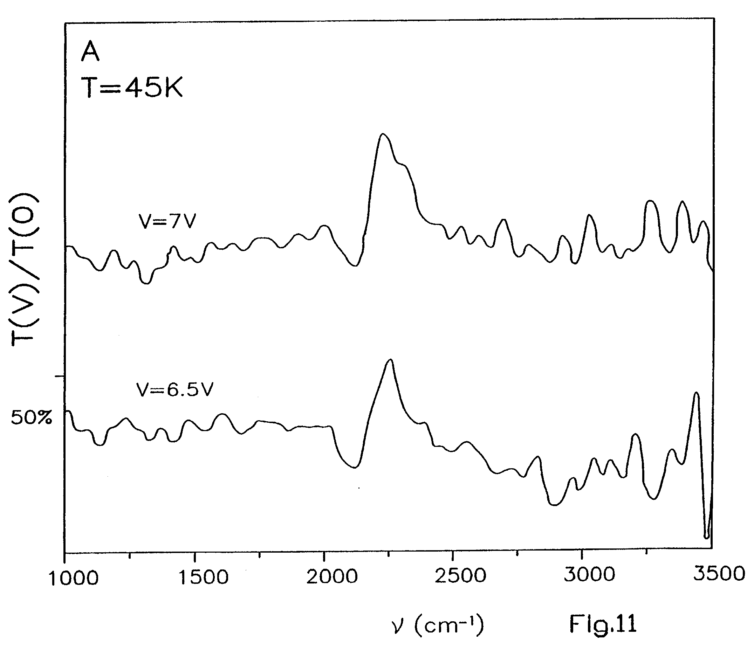

Lorsque cette gravure est terminée on utilise le masque n°2 pour former un dépôt métallique 23 sélectif, par exemple d'or, d'une part, sur l'électrode inférieure 15 en laissant dégagée une tranchée annulaire 25 autour de la structure centrale (Fig.10) afin d'éviter les court-circuits entre les deux électrodes et, d'autre part sur l'électrode supérieure 21, par exemple sous la forme d'une couronne 27.

Le dépôt est par exemple réalisé par évaporation.

Ainsi, on obtient deux contacts électriques respectivement sur les électrodes inférieure 15 et supérieure 21 qui permettent l'application d'un champ électrique aux puits quantiques.

Une source de tension 29 est reliée aux contacts 23, 27 afin d'appliquer une tension et donc un champ électrique au filtre optique 9.

La tension appliquée peut par exemple prendre la forme d'un signal carré dont les niveaux de tension sont à 0 et 3V. La tension pourrait également être de type sinusoïdal.

Un tel filtre optique 9 est conçu pour absorber un rayonnement à une longueur d'onde de $4,7\mu m$.

Lorsqu'on vise une longueur d'onde d'absorption particulière et lorsqu'on veut ajuster la position du niveau énergétique excité par rapport au haut de la barrière, la structure doit être calculée de manière adéquate. Les paramètres structuraux sont :

- les matériaux utilisés : leur différence de bandes interdites va définir la hauteur de barrière du puits quantique $\Delta Ec$ ou $\Delta Ev$. Dans le couple de matériaux III - V le plus couramment utilisé et industrialisé, GaAs/GaAlAs, la hauteur de barrière peut aller de 0 à environ 1eV pour un pourcentage d'aluminium dans GaAlAs de 0 à 100 %,
- l'épaisseur des couches et notamment la largeur L du matériau du puits. Les épaisseurs déposées par épitaxie par jets moléculaires sont actuellement contrôlées à la monocouche atomique près.

Plus L est petit et plus l'énergie de barrière est élevée, plus l'énergie de transition sera grande (plus courte sera la longueur d'onde d'absorption). L'énergie accessible est toujours limitée par $\Delta Ec$, hauteur de barrière, pour conserver des transitions de type lié-lié qui ont la caractéristique de donner lieu à un pic d'absorption plus étroit que les transitions de type lié-libre.

Pour que le champ électrique appliqué à la structure ait une composante non nulle suivant l'axe de croissance de l'empilement des matériaux il faut que le rayonnement optique soit couplé au filtre. Il existe plusieurs modes de couplage parmi lesquels : irradiation de la structure sous l'angle de Brewster, propagation en zig-zag dans la structure dont les facettes ont été préalablement polies à 45°, guide d'ondes à puits quantiques (l'onde optique se propage dans le plan des couches) et couplage du rayonnement par un réseau gravé à la surface de la structure (l'irradiation s'effectue à incidence normale).

La figure 10a montre pour l'échantillon A trois courbes de transmission optiques en fonction de la longueur d'onde et obtenues respectivement avec un couplage sous l'incidence de Brewster (courbe a) et un couplage sous forme de guide d'onde à 2 passages (courbe b) et à 4 passages (courbes c).

Dans les tableaux ci-dessous l'absorption optique du filtre a été mesurée pour différentes structures suivant un couplage optique sous l'angle de Brewster Ab quand cela était possible et une propagation du rayonnement en zig-zag Az (le nombre n de zig-zag a été indiqué).

Pour les différentes structures répertoriées ont également été indiquées : la largeur L du puits quantique en nanomètres, la teneur x en aluminium de la barrière (%), le dopage surfacique d ($cm^{-2}$), le moment dipolaire M (Å) et la longueur d'onde mesurée $\lambda$ ($\mu m$).

Ces structures concement toutes des transitions intersousbandes dans la bande de conduction mais cela n'enlève rien au fait que l'invention concerne également la bande de valence.

| Echantillon | L | x | d | M | $\lambda$ | $A_b$ | n | $A_z$ |
|---|---|---|---|---|---|---|---|---|
| A | 4,2 | 60 | $9.10^{11}$ | -12,5 | 4,7 | 3 | 5 | 35 |
| B | 4,5 | 60 | $9.10^{11}$ | -12,5 | 4,7 | 3 | 5 | 35 |
| C | 4,5 | 80 | $9.10^{11}$ | -11,9 | 4 | - | 5 | 35 |
| D | 6 | 100 | $7,8.10^{11}$ | -14,5 | 5,3 | - | 5 | 15 |
| E | 6 | 100 | $7,2.10^{11}$ | -14,5 | 5,2 | - | 7 | 20 |

Le fait d'obtenir une absorption Az significative pour ces cinq échantillons montre que l'effet d'absorption du filtre optique n'est pas annihilé malgré la hauteur de barrière importante et la position basse des états X dans la barrière.

L'échantillon F correspond à une structure à multipuits quantiques asymétriques dans laquelle le motif 6 de la structure est constitué de deux puits quantiques 8, 10 en GaAs de largeurs respectives égales à 4 et 2,5nm, séparés par une barrière 12 en $Al_{0,6}Ga_{0,4}As$ de largeur égale à 4nm.

Le premier puits 8 de largeur égale à 4nm est dopé à $2.10^{12}cm^{-2}$ alors que le second puits 10 n'est pas dopé. Le motif de cet échantillon est représenté sur la figure 10b.

L'échantillon G correspond à une structure à multipuits quantiques asymètriques dans laquelle le motif 14 de la structure est constitué d'un puits quantique 16 en GaAs de largeur égale à 3nm dopé à $6.10^{11}cm^{-2}$, d'une barrière intermédiaire 18 en $Al_{0,2}Ga_{0,8}As$ de largeur égale à 2nm et d'une barrière 20 en $Al_{0,6}Ga_{0,4}As$. Le motif de cet échantillon est représenté sur la figure 10c.

Les valeurs de M, $\lambda$, $A_b$, n et $A_z$ obtenues pour ces deux échantillons sont données ci-dessous :

| Echantillon | M | $\lambda$ | $A_b$ | n | $A_z$ |
|---|---|---|---|---|---|
| F | -11,6 | 4,3 | 10 | 7 | 30 |
| G | - | 5,4 | - | 5 | 25 |

Dans la structure de l'échantillon F, la largeur de la barrière entre les puits n'étant pas très grande, la fonction d'onde des porteurs de charge sur le niveau excité du premier puits a tendance à s'étendre sur le second puits.

Ce phénomène de couplage entre les deux puits contribue à l'augmentation de l'effet de modulation optique du filtre.

Le même raisonnement s'applique pour la structure de l'échantillon G où la fonction d'onde des porteurs de charge sur le niveau excité du puits s'étend au-dessus de la barrière intermédiaire.

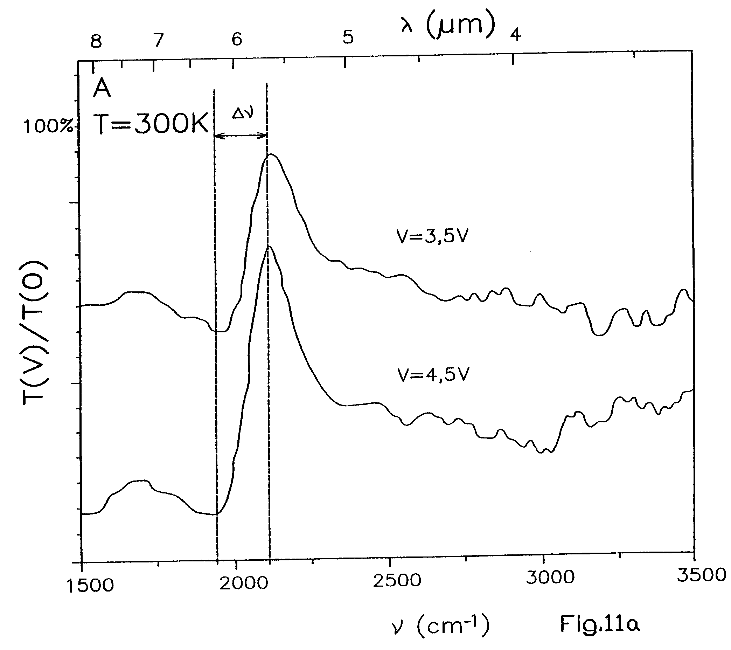

La figure 11 représente respectivement pour la structure référencée A les courbes correspondant au rapport des transmissions optiques du filtre considéré T(V) / T(0) mentionné précédemment en fonction du nombre d'onde $\upsilon$ pour la température de 45°K et pour deux valeurs de tension 6,5 et 7V.

Ainsi, ces courbes mettent en évidence l'existence du phénomène de modulation optique à basse température comme représenté sur la figure 5.

Sur la figure 11a, les deux lignes verticales en pointillés passant respectivement par le creux et par le pic de la courbe T(V)/T(0) à 4,5V mettent en évidence le phénomène de modulation optique à la température ambiante de 300°K et indiquent un déplacement d'environ $200cm^{-1}$ entre les valeurs $\upsilon_0$ et $\upsilon'_0$ de la figure 5.

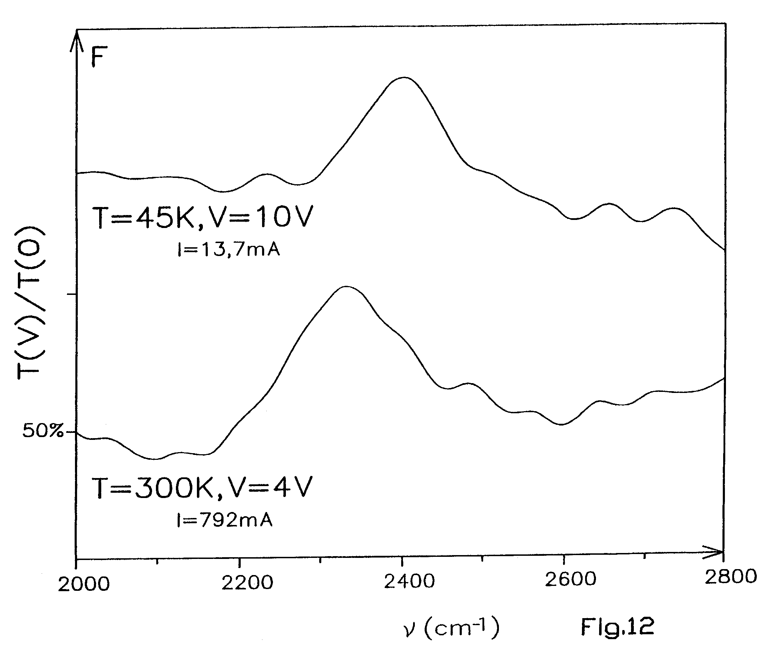

La figure 12 montre pour la structure référencée F les courbes T(V) / T (0) respectivement pour deux tensions différentes de 10 et 4V et pour les températures de 45°K et 300°K en fonction du nombre d'onde $\upsilon$. Il convient de noter que la tension réelle appliquée sur les puits quantiques à basse température est inférieure à 10V car les contacts ne sont pas parfaitement ohmiques. Pour les deux courbes obtenues respectivement à 45°K et 300°K le courant d'obscurité mesuré est respectivement de 13,7mA et 792mA. Ces résultats montrent que le phénomène de modulation d'amplitude existe à température ambiante et ce malgré la présence d'un courant d'obscurité très important (environ 50 fois la valeur du courant à 45°K) et que contrairement à ce que l'on pouvait penser, il n'existe pas de couplage entre les états $\Gamma$ du puits($E_0$, $E_1$) et les états X ($e_0$, $e_1$) de la barrière qui empêche le bon fonctionnement d'un filtre optique intersousbandes à température ambiante.

En effet, si un tel couplage se produisait on n'observerait pas de pic à la température ambiante sur la courbe T(V) / T(0).

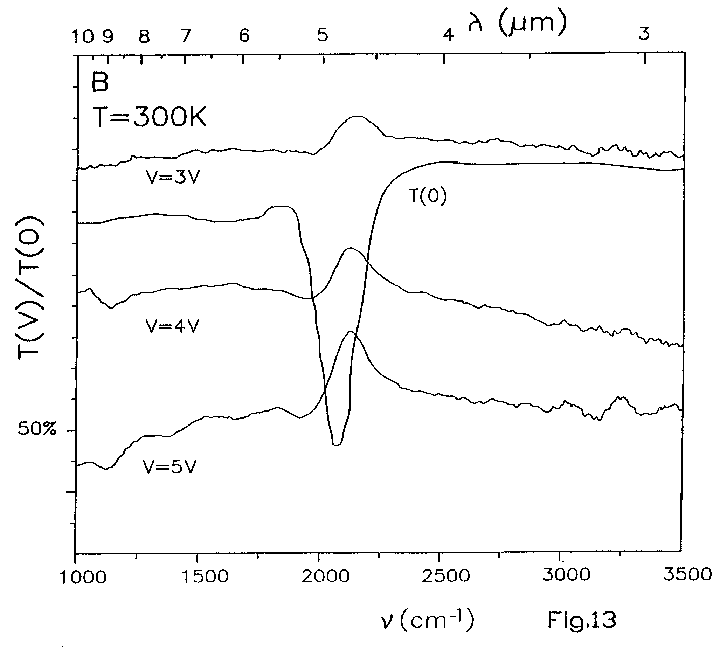

La figure 13 représente la courbe T(0) et les courbes T(V) / T(0), en fonction du nombre d'onde $\upsilon$ (indiqué en bas) ou de la longueur d'onde (en haut), pour les tensions respectives 3, 4 et 5V, obtenues à la température de 300°K sur la structure référencée B.

Ainsi, plus la tension est élevée plus l'effet d'affaissement ou d'évanouissement du pic d'absorption est prononcé (voir Fig.6), ce qui se traduit de manière inverse en termes de rapport T(V) / T(0) : plus la tension est élevée, plus la courbe T(V) / T(0) présente un pic marqué qui tend à se rapprocher de la courbe 1/T(0).

Dans cette structure, le niveau d'énergie excité $E_1$ est situé à une distance du continuum d'états telle que la différence d'énergie, ou hauteur énergétique, entre ledit niveau et le continuum est de l'ordre de 100meV.

Il convient de noter que cette valeur est de préférence inférieure à 100meV si l'on souhaite obtenir un basculement du niveau excité dans le continuum et donc un filtre "évanoui". Pour des valeurs supérieures à 100mev il faudrait appliquer à la structure une tension électrique trop élevée qui risquerait d'endommager ladite structure.

Toutefois, lorsque l'effet "d'évanouissement" (voir Fig.6) n'est pas souhaité mais que seul l'effet de déplacement du pic d'absorption est souhaité (voir Fig.5) alors la condition précédemment mentionnée n'est pas à respecter.

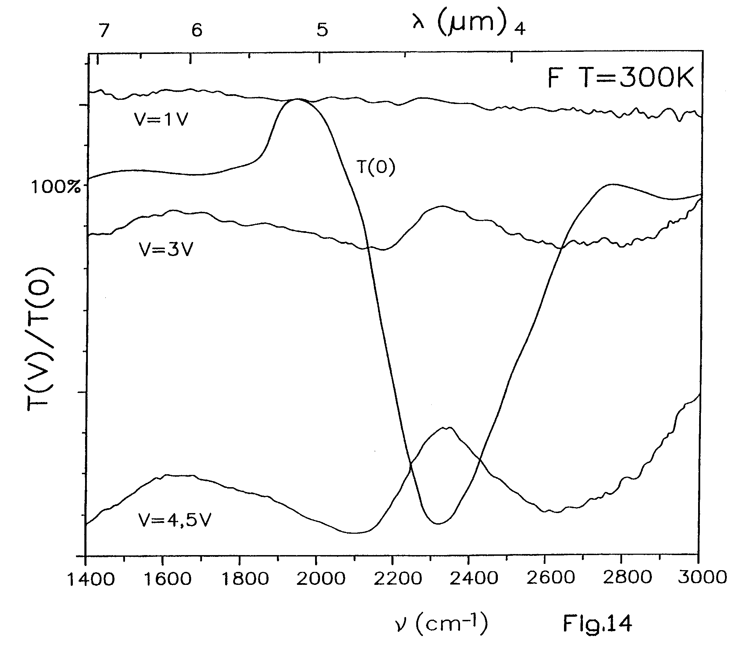

La figure 14 représente le même type de courbes à la même température pour des tensions de 1,3 et 4,5V et pour la structure référencée F.

Ces courbes montrent également que le pic d'énergie s'affaiblit en s'élargissant lorsque la tension électrique augmente.

Dans cette structure la différence d'énergie entre le niveau excité et le continuum est proche de 100meV.

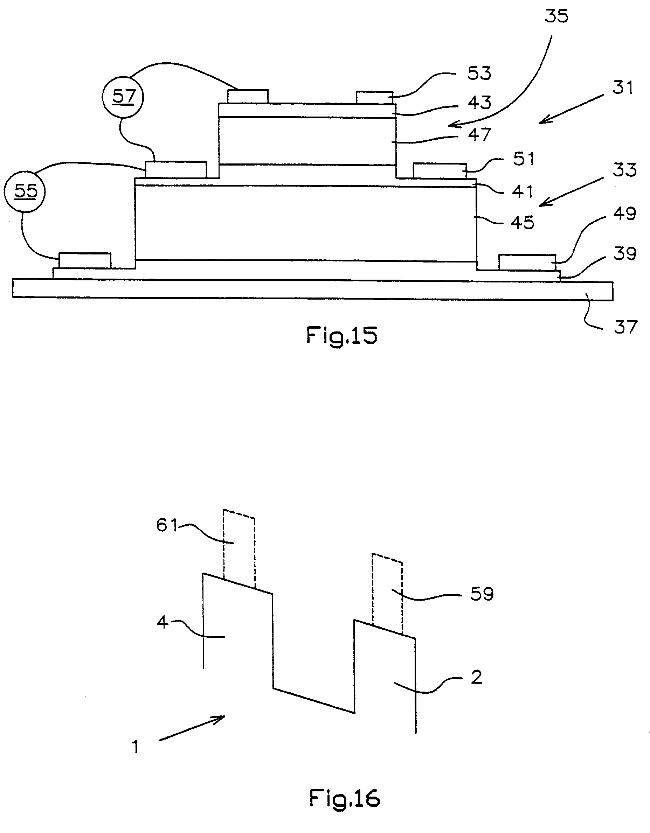

Selon un autre mode de réalisation de l'invention (Fig.15), un dispositif 31 de filtrage de rayonnement optiques comprend plusieurs filtres optiques du type de ceux décrits ci-dessus en référence aux figures 1 à 14 et par exemple deux filtres 33, 35.

Chaque filtre est conçu pour sélectionner une longueur d'onde différente $\lambda_0$, $\lambda_1$, par exemple celles du méthane (3,3µm) et du monoxyde de carbone (4,7µm). Les deux filtres sont épitaxiés sur un même substrat 37 de GaAs semi-isolant de façon analogue à ce qui a été décrit dans l'exemple de fabrication ci-dessus.

Comme représenté sur la figure 15, trois électrodes 39, 41, 43 en matériau GaAs dopé encadrent respectivement les deux structures à multipuits quantiques 45, 47 des deux filtres et sont pourvues de dépôts métalliques sous forme circulaire pour réaliser les contacts électriques 49, 51, 53.

Ainsi, en appliquant une tension particulière à chaque filtre optique 33, 35 au moyen de deux sources de tension 55, 57 on obtient l'effet souhaité (déplacement du pic d'absorption et/ou "évanouissement") sur chacun d'eux. Il est donc possible de faire de l'analyse ou de la détection multigaz simultanément si l'on a affaire à un mélange gazeux.

Par ailleurs, autour de certaines longueurs d'onde, il existe parfois de nombreuses raies gazeuses d'absorption qui rendent difficile la conception d'un filtre optique selon l'invention pouvant se déplacer d'une longueur d'onde déterminée (position de mesure) à une longueur d'onde pour laquelle il n'existe pas de gaz interférent (position de référence).

Ainsi, avec deux filtres associés comme décrit ci-dessus, l'un peut être fixé sur une longueur d'onde de référence tandis que l'autre peut explorer, par déplacement du pic d'absorption, les nombreuses raies gazeuses voisines d'une longueur d'onde déterminée.

On comprendra aisément qu'avec deux, trois, quatre filtres ou plus un tel dispositif de filtrage permet de faire de l'analyse spectrale de gaz et de la détection multigaz.

Dans le cas où l'on utilise deux filtres optiques superposés, un filtre pour la mesure et un filtre "positionné" sur une longueur d'onde de référence, on effectue une démodulation des signaux reçus par le détecteur associé au moyen d'une détection synchrone classique puis on divise entre eux les signaux ainsi obtenus pour en déduire la concentration du gaz.

Comme mentionné précédemment, le courant d'obscurité qui traverse la structure à multipuits quantiques est sans effet sur la modulation du filtre optique.

Toutefois, il est préférable de réduire ce courant d'obscurité afin de limiter la consommation énergétique du filtre optique.

Ceci peut être réalisé en augmentant la largeur des barrières, jusqu'à 50nm par exemple, ou en réalisant une jonction Schottky, par exemple au niveau de l'électrode supérieure 21 (il suffit de ne pas doper cette électrode).

Il est également possible de former au dessus de chaque barrière 2, 4 adjacente à un puits quantique une barrière supplémentaire 59, 61 ou barrière d'énergie supérieure.

Il est préférable que la barrière supplémentaire ait une largeur inférieure à celle de la barrière 2, 4 d'énergie inférieure comme représenté sur la figure 16 (en présence d'un champ électrique), afin d'éviter que les porteurs de charge situés dans le puits ne subissent pas l'effet de ladite barrière supplémentaire.

Si l'on utilise le couple de matériaux semiconducteurs GaAs / $Al_xGa_{1-x}As$ pour réaliser la structure à multipuits quantiques et si la barrière est de type direct, c'est-à-dire que la teneur en aluminium x est inférieure à 40%, alors les électrons du courant d'obscurité transitent par des états $\Gamma$ et la tension en aluminium $x_1$ dans la barrière supérieure 59,61 doit être supérieure à x et par exemple égale à 100%.

Si au contraire, x >40%, alors les électrons du courant d'obscurité transitent par des états de type X. Dans ce cas, la barrière d'énergie supérieure 59,61 doit représenter une barrière pour ces états X et la teneur en aluminium $x_2$ dans la barrière d'énergie supérieure doit être inférieure à x.

## Revendications

1. Filtre optique (9) fonctionnant à température ambiante, comprenant une structure à multipuits quantiques (1) réalisée à partir de couches alternées de matériaux semiconducteurs et présentant une absorption résonante d'un rayonnement optique de longueur d'onde donnée entre au moins deux niveaux d'énergie d'un même puits quantique (1) de la bande de conduction ou de valence, l'un desdits niveaux d'énergie appelé niveau inférieur $E_0$ comportant des porteurs de charge et l'autre niveau appelé niveau supérieur $E_1$ recevant des porteurs de charge provenant dudit niveau inférieur $E_0$ et excités sous l'effet du rayonnement optique considéré, les niveaux d'énergie se déplaçant sous l'action d'un champ électrique appliqué à la structure.

2. Filtre selon la revendication 1, dans lequel les niveaux d'énergie $E_0$ et $E_1$ se déplacent sous l'action d'un champ électrique de manière à ce que le filtre (9) présente une absorption résonante vis-à-vis d'un rayonnement optique de longeur d'onde différente.

3. Filtre selon la revendication 1 ou 2, dans lequel le niveau d'énergie supérieur $E_1$ est proche du haut de la barrière adjacente à un puits quantique et, sous l'action d'un champ électrique, est couplé au continuum d'états d'énergie par effet tunnel à travers ladite barrière.

4. Filtre selon la revendication 3, dans lequel la différence d'énergie entre le niveau d'énergie supérieur $E_1$ et le haut de la barrière est sensiblement inférieure à 100meV.

5. Filtre selon la revendication 3 ou 4, dans lequel le niveau d'énergie supérieur $E_1$ se déplace au dessus de la barrière sous l'action d'un champ électrique.

6. Filtre selon l'une des revendications 1 à 5, dans lequel les états X de la bande de conduction dans les couches de matériaux semi-conducteurs formant barrière (2, 4) sont inférieurs aux états $\Gamma$ finaux de ladite bande dans ces mêmes couches.

7. Filtre selon l'une des revendications 1 à 6, dans lequel les matériaux semi-conducteurs sont choisis parmi les matériaux du type III - V.

8. Filtre selon la revendication 7, dans lequel la structure à multipuits quantiques est réalisée à partir de couches alternées de GaAs et $Al_xGa_{1-x}As$.

9. Filtre selon la revendication 8, dans lequel x ≥40 %.

10. Filtre selon l'une des revendications 1 à 9, dans lequel les longueurs d'onde du rayonnement optique sont inférieures ou égales à 10μm.

11. Filtre selon la revendication 10, dans lequel les longueurs d'onde du rayonnement optique sont inférieures ou égales à 5μm.

12. Filtre selon l'une des revendications 1 à 11, dans lequel les puits quantiques renferment au moins deux niveaux d'énergie supérieurs qui sont prévus pour recevoir respectivement des porteurs provenant du niveau inférieur et excités sous l'action d'au moins deux rayonnements optiques constitués d'au moins deux longueurs d'onde distinctes.

13. Filtre selon l'une des revendications 1 à 12, dans lequel une barrière supplémentaire est formée au dessus de chaque barrière adjacente à un puits quantique afin de prolonger cette dernière.

14. Filtre selon la revendication 13, dans lequel la barrière supplémentaire possède une largueur inférieure à celle de la barrière située en-dessous.

15. Filtre selon les revendications 8 et 13, dans lequel la barrière supplémentaire est réalisée dans les matériaux

$Al_{x1}Ga_{1-x1}As$ où $x_1 > x$ et x est le pourcentage d'aluminium obtenu dans la barrière située en dessous.

16. Filtre selon les revendications 9 et 13, dans lequel la barrière supplémentaire est réalisée dans les matériaux $Al_{x2}Ga_{1-x2}As$ où $x_2 < x$ et x est le pourcentage d'aluminium obtenu dans la barrière située en dessous.

17. Dispositif (31) de filtrage de rayonnements optiques, caractérisé en ce qu'il comprend plusieurs filtres (33, 35) selon l'une des revendications 1 à 16, chacun desdits filtres (33, 35) étant adapté à au moins un rayonnement de longueur d'onde différente.

18. Dispositif de filtrage selon la revendication 17, dans lequel les filtres (33, 35) sont superposés.

19. Dispositif de filtrage selon la revendication 17 ou 18, comprenant des moyens (55, 57) pour appliquer un champ électrique aux bornes de chaque filtre.

20. Appareil (3) de détermination d'une concentration d'au moins un gaz, comprenant :

   - une source (5) d'un rayonnement optique dont la gamme spectrale couvre au moins une raie d'absorption d'un gaz,
   - une cellule (7) contenant ledit gaz et qui est traversée par le rayonnement,
   - au moins un filtre (9) recevant le rayonnement dont la densité spectrale a été modifiée par le gaz,
   - des moyens(29) pour appliquer un champ électrique aux bornes dudit filre,
   - un détecteur (11) du rayonnement filtré mesurant l'énergie dudit rayonnement,
   - et des moyens pour déterminer la concentration du gaz à partir de deux mesures de l'énergie dont l'une sert de valeur de référence,
   caractérisé en ce que le filtre (9) est conforme à l'une des revendications 1 à 19.

Fig.1

Fig.3

Fig.4

Fig.2

EP 0 880 047 A1

Fig.5

Fig.6

```
┌─────┐        ┌──────────┐        ┌─────┐        ┌─────┐
│  5  │ ────→  │    7     │ ────→  │  9  │ ────→  │ 11  │
└─────┘        └──────────┘        └─────┘        └─────┘
```

3 ↗

Fig.7

Fig.7a

Fig.8

Fig.9

Fig.10

Fig.10a

Fig.10b

Fig.10c

Fig.11

EP 0 880 047 A1

Fig.11a

Fig.12

Fig.13

Fig.14

Fig.15

Fig.16

## RAPPORT DE RECHERCHE EUROPEENNE

Office européen
des brevets

Numéro de la demande

EP 98 20 1640

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | DELACOURT D ET AL: "Modulation infrarouge dans des structures à puits quantiques III-V" REVUE TECHNIQUE THOMSON-CSF, SEPT. 1992, FRANCE, vol. 24, no. 3, pages 793-815, XP000576760 ISSN 0035-4279 * chapitre "Introduction" * * chapitre I * | 1,2,7,8, 10,11 | G02F1/015 |
| Y | idem | 3,5 | |
| X | EP 0 549 132 A (AMERICAN TELEPHONE & TELEGRAPH) 30 juin 1993 * colonne 2, ligne 31 - colonne 3, ligne 7 * * colonne 3, ligne 39 - colonne 4, ligne 34 * * colonne 5, ligne 41 - ligne 49 * * colonne 7, ligne 13 - ligne 54 * * colonne 10, ligne 22 - ligne 29 * * revendication 10; figures 3,4,11 * | 1,2,7,8, 10,11 | |
| X | PAN J L ET AL: "Inducing normally forbidden transitions within the conduction band of GaAs quantum wells" APPLIED PHYSICS LETTERS, 23 JULY 1990, USA, vol. 57, no. 4, pages 366-368, XP000150127 ISSN 0003-6951 * page 366, alinéa 1 - alinéa 3 * * page 368, alinéa 2 - alinéa 3 * | 1,2,7,8, 10-12 | |

**DOMAINES TECHNIQUES RECHERCHES (Int.Cl.6)**

G02F

-/--

Le présent rapport a été établi pour toutes les revendications

| Lieu de la recherche | Date d'achèvement de la recherche | Examinateur |
|---|---|---|
| LA HAYE | 17 août 1998 | Iasevoli, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

**EP 0 880 047 A1**

Office européen
des brevets

**RAPPORT DE RECHERCHE EUROPEENNE**

Numéro de la demande

EP 98 20 1640

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP 0 701 148 A (HUGHES AIRCRAFT CO) 13 mars 1996 <br><br> * abrégé; revendications 1,4,9,10; figures 1-4,7,8 * <br> --- | 1,2,7,8, 10,11, 17-19 | |
| Y | GONZALEZ DE LA CRUZ G ET AL: "Tunneling effect on the intersubband optical absorption in quantum well structures" SOLID STATE COMMUNICATIONS, MAY 1996, ELSEVIER, USA, vol. 98, no. 6, pages 553-558, XP002054810 ISSN 0038-1098 * abrégé; figure 2 * * chapitre 4, alinéa 1; chapitre 5 * <br> --- | 3,5 | |
| A | FR 2 740 550 A (SCHLUMBERGER IND SA) 30 avril 1997 * revendication 20; figure 2 * <br> ----- | 20 | |
| | | | **DOMAINES TECHNIQUES RECHERCHES (Int.Cl.6)** |

Le présent rapport a été établi pour toutes les revendications

| Lieu de la recherche | Date d'achèvement de la recherche | Examinateur |
|---|---|---|
| LA HAYE | 17 août 1998 | Iasevoli, R |